# EUROPEAN PATENT SPECIFICATION

(11) **EP 2 894 713 B1**
(45) Date of publication and mention of the grant of the patent: **24.04.2019**
(21) Application number: 13833530.2
(22) Date of filing: 21.06.2013
(51) Int. Cl.: H01Q 1/24

(54) **MOBILE PHONE THREE-IN-ONE AERIAL DEVICE AND MOBILE TERMINAL**
3-IN-1-ANTENNENVORRICHTUNG EINES MOBILTELEFONS UND MOBILES ENDGERÄT
DISPOSITIF D'ANTENNE « TROIS EN UN » POUR TÉLÉPHONE MOBILE ET TERMINAL MOBILE

(30) Priority: 31.08.2012 CN 201210317748
(43) Date of publication of application: 15.07.2015
(73) Proprietor: Huizhou TCL Mobile Communication Co., Ltd., Huizhou, Guangdong 516006 (CN)
(72) Inventor: HE, Li, Huizhou Guangdong 516006 (CN)
(74) Representative: Petraz, Gilberto Luigi
(86) International application number: PCT/CN2013/077644
(87) International publication number: WO 2014/032459

(56) References cited:
- EP-A2- 2 482 811
- CN-A- 1 345 106
- CN-A- 102 394 667
- CN-A- 102 394 667
- CN-A- 102 856 629
- CN-U- 201 985 244
- US-A1- 2005 277 436
- US-A1- 2010 117 909

## Description

### TECHNICAL FIELD OF THE INVENTION

The present invention relates to the technical field of radios, and in particular to a three-in-one antenna device for a mobile phone and a mobile terminal.

### BACKGROUND OF THE INVENTION

The functions of mobile phones are increasing with the rapid development of mobile communication. Since GPS (global positioning system), BT (bluetooth), and WiFi (wireless fidelity) applications have become widespread, more antennas are required to cover new frequency ranges. More mobile phones not only have one primary antenna, but combine many auxiliary antennas together, such as a GPS antenna, a BT antenna and a WiFi antenna. However, the space left in the mobile phone for antennas is limited, and the antennas in the mobile phone occupy the space to a certain extent. Thus, in the case where the external dimensions and the internal space of the current mobile phones are very limited, the pursuit of powerful functions while reducing the volume of the mobile phones is a technical problem which is urgently needing to be resolved.

Hence, the prior art can still be improved.

CN102394667 is also filed by the applicant of the present application filed on August 9, 2011, wherein the GPS and 3G single-antenna realizing device includes a dual resonant antenna, a matching circuit and a duplexer.

### SUMMARY OF THE INVENTION

Due to the problem of the prior art given above, a primary object of the present invention is to provide a three-in-one antenna device for a mobile phone and a mobile terminal. A GPS antenna, a WIFI antenna, and a BT antenna are designed as a single antenna for reducing the space which the antennas occupy, and diminish the mobile phone size.

To achieve the above object, the following technical solutions are adopted in the present invention:

A three-in-one antenna device for a mobile phone is provided, comprising:
a three-in-one antenna for receiving and transmitting a WiFi (wireless fidelity) signal, and a BT (bluetooth) signal, and receiving a GPS (global positioning system) signal;
an antenna matching unit for impedance matching; and
an RF (radiofrequency) unit for processing a GPS signal, a WiFi signal, and a BT signal;
the three-in-one antenna, the antenna matching unit and the RF unit being sequentially connected,
wherein the RF unit further comprises:
   a dual-band duplexer;
   a BT / WiFi RF circuit for processing a BT signal and a WiFi signal; and
   a GPS RF circuit for processing a GPS signal,
   wherein the BT / WiFi RF circuit and the GPS RF circuit are connected to the antenna matching unit via the dual-band duplexer,
   wherein the antenna matching unit includes a first element, a second element, and the third element, the tree-in-one antenna is grounded via the second element, the tree-in-one antenna is connected to the RF unit and an end of the third element via the first element, and the other end of the third element is grounded,
   wherein the tree-in-one antenna is an inverted F antenna or a monopole antenna.

A three-in-one antenna device for a mobile phone is provided, comprising:
a three-in-one antenna for receiving and transmitting a WiFi signal, and a BT signal, and receiving a GPS signal;
an antenna matching unit for matching impedance; and
an RF unit for processing a GPS signal, a WiFi signal, and a BT signal;
wherein the three-in-one antenna, the antenna matching unit, and the RF unit are sequentially connected,
wherein the RF unit further comprises:
   a dual-band duplexer;
   a BT / WiFi RF circuit for processing a BT signal and a WiFi signal; and
   a GPS RF circuit for processing a GPS signal,
   wherein the BT / WiFi RF circuit and the GPS RF circuit are connected to the antenna matching unit via the dual-band duplexer,

A mobile terminal comprising the foregoing three-in-one antenna device for the mobile phone is provided.

Compared with the prior art, the three-in-one antenna device for the mobile phone and the mobile terminal provided in the present invention comprises a three-in-one antenna, an antenna matching unit, and an RF unit. The three-in-one antenna, the antenna matching unit, and the RF unit are sequentially connected. The RF unit further comprises a dual-band duplexer, a BT / WiFi RF circuit, and a GPS RF circuit. The BT / WiFi RF circuit and the GPS RF circuit are connected to the antenna matching unit via the dual-band duplexer. When a signal is being received, the dual-band duplexer respectively transmits a GPS signal and a BT / WiFi signal, which the three-in-one antenna receives, to the GPS RF circuit and the BT / WiFi RF circuit. The GPS RF circuit processes the GPS signal, and the BT / WiFi RF circuit processes the BT / WiFi signal. When a signal is being emitted, the BT / WiFi RF circuit outputs and transmits the BT signal and the WiFi signal to the three-in-one antenna via the dual-band duplexer for emission, so that the GPS antenna, the WIFI antenna, and BT antenna are designed as a single antenna for reducing the space occupied by the antennas, improving the space usage in the mobile phone, and diminishing the mobile phone size.

### BRIEF DESCRIPTION OF THE DRAWINGS

FIG. 1 is a schematic diagram of a three-in-one antenna device for a mobile phone of the present invention.
FIG. 2 is a structural diagram of a three-in-one antenna device for a mobile phone in accordance with a first embodiment of the present invention.
FIG. 3 is a structural diagram of a three-in-one antenna device for a mobile phone in accordance with a second embodiment of the present invention.

### DETAILED DESCRIPTION OF THE INVENTION

The present invention provides a three-in-one antenna device for the mobile phone and a mobile terminal. The embodiments of the present invention are further described in detail below with reference to the accompanying drawings for clarifying and specifying the object, effects, and technical solutions of the present invention. It should be understood that the specific embodiments described herein are only used to explain the present invention, and are not intended to limit the present invention.

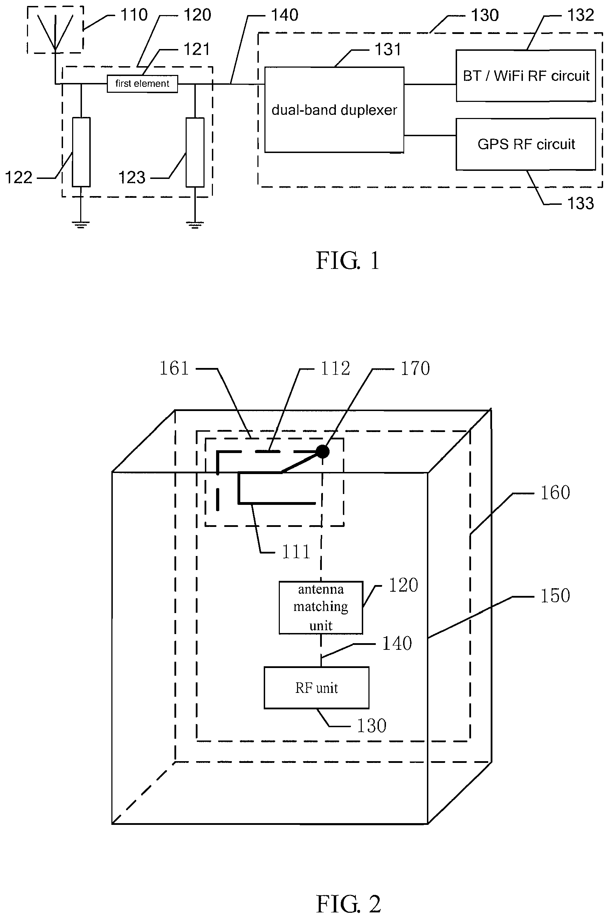

FIG. 1 is a schematic diagram of the three-in-one antenna device for a mobile phone of the present invention. The three-in-one antenna device for the mobile phone includes a three-in-one antenna 110, an antenna matching unit 120, and an RF unit 130. The three-in-one antenna 110, the antenna matching unit 120, and the RF unit 130 are sequentially connected. The RF unit 130 is used for processing GPS signals, WiFi signals, and BT signals. The RF unit 130 includes a dual-band duplexer 131, a BT / WiFi RF circuit 132, and GPS RF circuit 133. The antenna matching unit 120 is respectively connected to the BT / WiFi RF circuit 132 and the GPS RF circuit 133 via the dual-band duplexer 131. The BT / WiFi RF circuit 132 is used for processing the BT signals and the WiFi signals, and the GPS RF circuit 133 is used for processing the GPS signals. The RF unit 130 also includes some smaller circuits such as a filter, an ESD (Electro-Static Discharge), and other circuits.

A common end of the dual-band duplexer 131 is connected to the three-in-one antenna 110, and the other two ends are respectively connected to the BT / WiFi RF circuit 132 (frequency of 2.4GHz) and the GPS RF circuit 133 (frequency of 1575.42GHz). When the signals are being received, the dual-band duplexer 131 divides the signals which the three-in-one antenna 110 receives into two, which are GPS signals and BT / WiFi signals, and respectively transmits the GPS signals and the BT / WiFi signals to the GPS RF circuit 132 and the BT / WiFi RF circuit 133. The GPS RF circuit 133 processes the GPS signal and the BT / WiFi RF circuit 132 processes the BT / WiFi signal. When the signals are being emitted, the BT / WiFi RF circuit outputs and transmits the BT signal and the WiFi signal to the three-in-one antenna via the dual-band duplexer for emission, so that when the three-in-one antenna 110 is emitting the signals, such as emitting the BT signals and the WiFi signals, the BT / WiFi RF circuit 132 outputs and transmits the BT signals and the WiFi signals to the three-in-one antenna 110 via the dual-band duplexer 131 for emission. Thus, receiving and emitting the BT signals and the WiFi signals, and receiving the GPS signals is achieved. In practice, the dual-band duplexer with high isolation is generally adopted for ensuring the separation between the BT / WiFi signals and the GPS signals and the separation between the reception and emission of each of the two signals, so that two signals do not interfere with each other. Moreover, as to the RF circuit and other common RF circuits, the separations between them are also ensured.

Furthermore, for transmitting the high-frequency signals more effectively and matching the signal outputting ends to loads well, the three-in-one antenna 110 is connected to the antenna matching unit 120 via an impedance line 140, the antenna matching unit 120 is connected to the dual-band duplexer 131 via the impedance line 140, and the dual-band duplexer 131 is connected to the BT / WiFi RF circuit 132 and the GPS RF circuit 133 via the impedance line 140. Since the characteristic impedance of the RF unit is 50 ohms, the selected impedance line is 50 ohms for impedance matching. The impedance line 140 can be a micro-strip line or a strip line.

The antenna matching unit 120 for matching the impedances includes a first element 121, a second element 122, and a third element 123; the three-in-one antenna 110 is grounded via the second element 122, and connected to the RF unit 130 via the first element 121. The three-in-one antenna 110 is connected to an end of the third element 123 via the first element 121. The other end of the third element 123 is grounded. The first element 121, the second element 122, and the third element 123 constitute a π-shaped matching circuit. The first element 121, the second element 122, and the third element 123 can be inductors, capacitors, resistors, or other components. By selecting different values and different components, the impedances can be matched effectively, thereby improving efficiency and reducing losses. In practice, the specific numerical values are obtained through actual tests, thereby obtaining the matching circuit. It can be also selected that no additional elements are used. For example, the first element 121 can be selected as a resistor of zero ohm. Moreover, the impedance line 140 and the antenna matching unit 120 constitute a matching network with other solid elements, such as an inductor and a capacitor, so as to match the signal outputting ends to the loads well.

Furthermore, the antenna matching unit 120, the first element 121, the second element 122, and the third element 123 also connected via the impedance lines 140.

The three-in-one antenna 110 is used for receiving GPS signals, and receiving and emitting the WiFi signals and BT signals. In the present invention, the three-in-one antenna 110 can be an IFA (inverted F antenna) or a monopole antenna. An IFA is similar to a monopole antenna. In the embodiment of the present invention, a monopole antenna is taken as an example.

FIG. 2 is a structural diagram of a three-in-one antenna device for a mobile phone in accordance with a first embodiment of the present invention. The three-in-one antenna device for the mobile phone also includes an antenna bracket 150, since the antenna is riveted on the rear shell of the mobile phone or the antenna bracket 150 in practice. The mobile phone includes a PCB (printed circuit board) 160. A clearance zone 161 and a feed point 170 are disposed on the PCB 160. The three-in-one antenna 110 includes a GPS antenna segment 111 for receiving the GPS signals and a BT / WiFi antenna segment 112 for receiving and emitting the BT / WiFi signals. The feed point 170, the antenna matching unit 120, and the RF unit 130 are disposed on the PCB 160. The GPS antenna segment 111 is disposed on the antenna bracket 150, and the BT / WiFi antenna segment 112 is disposed in the clearance zone 161 on the PCB 160. The GPS antenna segment 111 and the BT / WiFi antenna segment 112 connect the antenna matching unit 120 via the feed point 170. The RF unit 130 activates the GPS antenna segment 111 and the BT / WiFi antenna segment 112 via the feed point 170.

The three-in-one antenna 110 can also be riveted on the rear shell of the mobile phone. In other word, the rear shell of the mobile phone is used as the antenna bracket of the three-in-one antenna 110. The BT / WiFi antenna segment 112 is a PCB antenna, which is printed on the PCB. The clearance zone 161 is an area of the PCB 160 which has no "ground". The BT / WiFi antenna segment 112 can be designed as a straight line, a broken line, a curved line, a U-shape, and various other shapes, which are directly disposed on the PCB 160. Combining the three-in-one antenna 110 with radiofrequency commissioning results is required to determine the length thereof. In other words, the length thereof is adjusted and determined by combining the GPS antenna segment, the BT / WiFi antenna segment and the environment of the mobile phone together. Typically, the length thereof is between a quarter and a half of the wavelength of the communication signal. In other words, the length of the GPS antenna segment 111 is between a quarter and a half of the GPS signal wavelength, and the length of the BT / WiFi antenna segment 112 is between a quarter and a half of the BT / WiFi signal wavelength.

In practice, the GPS antenna segment 111 is disposed on the antenna bracket 150, the width thereof is about 1 mm, and the length thereof is about 40 mm. The BT / WiFi antenna segment 112 is disposed on the PCB 160, and the width thereof is about 1 mm, the length thereof is about 20 mm, and the distance thereof to the edge of the clearance zone 161 is above 2mm.

The implementation of the three-in-one antenna device for the mobile phone provided by the present invention is simple. It is not required to individually arrange space for each of the GPS antenna and the BT / WiFi antenna, diminishing the mobile phone size, and matching the currently popular designs of appearances and structures. Since the implementation is simple, it is especially suitable for the smart phones with various functions.

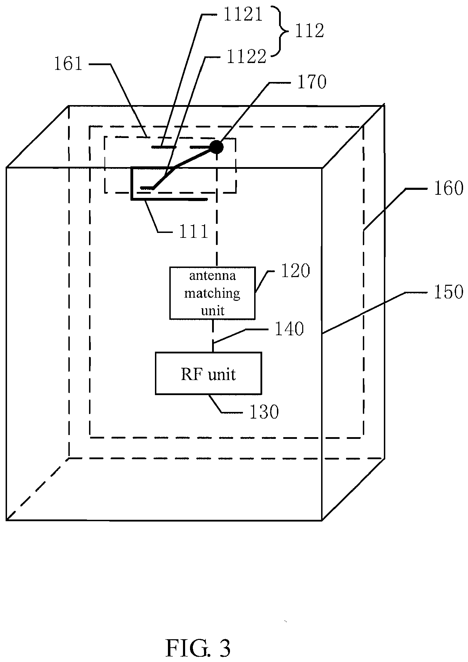

FIG. 3 is a structural diagram of a three-in-one antenna device for a mobile phone in accordance with a second embodiment of the present invention. The three-in-one antenna device further comprises an antenna bracket 150, the mobile phone comprises a PCB 160, on which a clearance zone 161 and a feed point 170 are disposed. The three-in-one antenna 110 comprises a GPS antenna segment 111 for receiving the GPS signals BT and a BT / Wifi antenna segment 112 for receiving and emitting the WiFi signals and the BT signals. The feed point 170, the antenna matching unit 120, and the RF unit 130 are disposed on the PCB 160. The GPS antenna segment 111 is disposed on the antenna bracket 150. The BT / WiFi antenna segment 112 comprises a part of the BT / WiFi antenna segment 1121 disposed in the clearance zone 161 on the PCB 160 and another part of the BT / WiFi antenna segment 1122 disposed on the antenna bracket 150. The GPS antenna segment 111 and the BT / WiFi antenna segment 112 are connected to the antenna matching unit 120 via the feed point 170. The RF unit 130 activates the GPS antenna segment 111 and the BT / WiFi antenna segment 112 via the feed point 170.

In practice, the GPS antenna segment 111 is disposed on the antenna bracket 150, the width thereof is about 1 mm, and the length thereof is about 40 mm. The GPS antenna segment 111 is connected to the feed point 170 via an antenna elastic piece on the GPS antenna segment 111. In the present embodiment, the part of the BT / WiFi antenna segment 1121 disposed on the PCB 160 is a PCB antenna. The width thereof is a 1 mm, the length thereof is about 15 mm, and the distance thereof to the metal on the edge of the clearance zone 161 is above about 2 mm. A part of the BT / WiFi antenna segment 1121 is directly connected to the feed point 170. Another part of the BT / WiFi antenna segment 1122 is disposed on the antenna bracket 150 and connected to the feed point 170. The width thereof is 1mm, the length thereof is about 7 mm. Thus, the total length of the BT / WiFi antenna segment 112 is about 22 mm.

The RF signals outputted from the RF unit 130 are fed to the feed point 170 of the monopole antenna via an impedance line 140 of 50 ohms, and activate the GPS antenna segment 111 and the BT / WiFi antenna segment 112 for emitting radiation.

In summary, a three-in-one antenna device for a mobile phone provided in the present invention, comprises a three-in-one antenna, an antenna matching unit, and an RF unit. The three-in-one antenna, the antenna matching unit, and the RF unit are sequentially connected. The RF unit further comprises a dual-band duplexer, a BT / WiFi RF circuit, and a GPS RF circuit. The BT / WiFi RF circuit and the GPS RF circuit are connected to the antenna matching unit via the dual-band duplexer. When a signal is being received, the dual-band duplexer respectively transmits a GPS signal and a BT / WiFi signal, which the three-in-one antenna receives, to the GPS RF circuit and the BT / WiFi RF circuit. The GPS RF circuit processes the GPS signal, and the BT / WiFi RF circuit processes the BT / WiFi signal. When a signal is being emitted, the BT / WiFi RF circuit outputs and transmits the BT signal and the WiFi signal to the three-in-one antenna via the dual-band duplexer for emission, so that the GPS antenna, the WIFI antenna, and BT antenna are designed as a single antenna for reducing the space occupied by the antennas, improving the space usage in the mobile phone, and diminishing the mobile phone size.

Furthermore, by disposing the GPS antenna segment on the antenna bracket and disposing the BT / WiFi antenna segment on the clearance zone of the PCB, or by disposing the GPS antenna segment and a part of the BT / WiFi antenna segment on the antenna bracket and disposing another part of the BT / WiFi antenna segment on the clearance zone of the PCB, the three-in-one antenna apparatus provided in the present invention achieves the fact that there is no requirement for individually arranging space for each of the GPS antenna and the BT / WiFi antenna, thereby diminishing the mobile phone size. Since the implementation is simple, it is especially suitable for the smart phones with various functions, and matches the currently popular designs of appearances and structures.

The present invention also relates to a mobile terminal which uses the aforementioned three-in-one antenna device for the mobile phone to receive and emit the WiFi signals and the BT signals, and to receive the GPS signals, while processing the WiFi signals, the BT signals, and the GPS signals. Certainly, the mobile terminal specifically includes, but is not limited to, smart phones, tablets, e-book readers, MP4 players (Moving Picture Experts Group Audio Layer IV), and so on. The principles of the mobile terminal of the present invention are identical or similar to the embodiments of the three-in-one antenna device for the mobile phone described above. The mobile terminal should specifically be referred to the relevant descriptions of the embodiments of the three-in-one antenna device for the mobile phone.

It should be understood that modifications and substitutions can be made in accordance with equivalent technical solutions and inventive concepts for a person of ordinary skill in the art. All modifications and substitutions should belong to the scopes of the claims appended in the present invention.

## Claims

1. A three-in-one antenna device for a mobile phone, **characterized in that** the three-in-one antenna device for the mobile phone comprises:
a three-in-one antenna (110) for receiving and transmitting a WiFi (wireless fidelity) signal, and a BT (bluetooth) signal, and receiving a GPS (global positioning system) signal;
an antenna matching unit (120) for impedance matching, the three-in-one antenna (110) connected to the antenna matching unit (120); and
an RF (radiofrequency) unit (130) comprising a dual-band duplexer (131), a BT / WiFi RF circuit (132) for processing the BT signal and the WiFi signal, and the GPS RF circuit (133) for processing the GPS signal, the BT / WiFi RF circuit (132) and the GPS RF circuit (133) connected to the antenna matching unit (120) via the dual-band duplexer (131);
wherein the mobile phone comprises a PCB (printed circuit board) (160), the three-in-one antenna device further comprises an antenna bracket (150), the PCB board (160) is provided with a clearance zone (161) and a feed point (170), the three-in-one antenna comprises a GPS antenna segment (111) for receiving a GPS signal, and a BT / WiFi antenna segment (112) for receiving and transmitting a WiFi signal and a BT / WiFi signal,
the antenna matching unit (110) and the RF unit (130) are disposed on the PCB (160), the GPS antenna segment (111) is disposed on the antenna bracket (150), at least a part of the BT / WiFi antenna segment (112) is disposed on the clearance zone (161) of the PCB (160), the GPS antenna segment (111) and the BT / WiFi antenna segment (112) are connected to the antenna matching unit (120) via the feed point (170), and the RF unit (130) activates the GPS antenna segment (111) and the BT / WiFi antenna segment (112) via the feed point (170).

2. The three-in-one antenna device for the mobile phone as claimed in claim 1, **characterized in that** the three-in-one antenna (110) is connected to the antenna matching unit (120) via an impedance line, the antenna matching unit (120) is connected to the dual-band duplexer (131) via an impedance line, the dual-band duplexer (131) is connected to the BT / WiFi RF circuit (132) and the GPS RF circuit (133) via an impedance line.

3. The three-in-one antenna device for the mobile phone as claimed in claim 2, **characterized in that** the electrical impedance of the impedance lines is 50 ohms.

4. The three-in-one antenna device for the mobile phone as claimed in claim 1, **characterized in that** the antenna matching unit (120) includes a first element (121), a second element (122), and the third element (123), the three-in-one antenna (110) is grounded via the second element (122), the three-in-one antenna (110) is connected to the RF unit (130) and an end of the third element (123) via the first element (121), and the other end of the third element (123) is grounded.

5. The three-in-one antenna device for the mobile phone as claimed in claim 4, **characterized in that** each of the first element (121), the second element (122), and the third element (123) is an inductor, a capacitor, or a resistor.

6. The three-in-one antenna device for the mobile phone as claimed in claim 1, **characterized in that** the three-in-one antenna (110) is an inverted F antenna or a monopole antenna.

7. The three-in-one antenna device for the mobile phone as claimed in claim 1, **characterized in that** the length of the BT / WiFi antenna segment (112) is between 1/4 and 1/2 of the BT signal wavelength and the WiFi signal wavelength, and the length of the GPS antenna segment (111) is between 1/4 and 1/2 of the GPS signal wavelength.

8. A mobile terminal, **characterized in that** the mobile terminal comprises the three-in-one antenna device for the mobile phone as claimed in claim 1.

## Patentansprüche

1. 3-in-1-Antennenvorrichtung für ein Mobiltelefon, **dadurch gekennzeichnet, dass** die 3-in-1-Antennenvorrichtung für das Mobiltelefon umfasst:
eine 3-in-1-Antenne (110) zum Empfangen und Übertragen eines WiFi (Wireless Fidelity)-Signals und eines BT (Bluetooth)-Signals, und zum Empfangen eines GPS (Global Positioning System)-Signals;
eine Antennenanpassungseinheit (120) zur Impedanzanpassung, wobei die 3-in-1-Antenne (110) mit der Antennenanpassungseinheit (120) verbunden ist; und
eine Funkfrequenzeinheit (130) umfassend einen Zweiband-Duplexer (131), einen BT/WiFi-Funkfrequenzschaltkreis (132) zur Verarbeitung des BT-Signals und des WiFi-Signals, und den GPS-Funkfrequenzschaltkreis (133) zur Verarbeitung des GPS-Signals, wobei der BT/WiFi-Funkfrequenzschaltkreis (132) und der GPS-Funkfrequenzschaltkreis (133) über den Zweiband-Duplexer (131) mit der Antennenanpassungseinheit (120) verbunden sind;
worin das Mobiltelefon eine Leiterplatte (160) umfasst, die 3-in-1-Antennenvorrichtung ferner eine Antennenhalterung (150) umfasst, die Leiterplatte (160) mit einem Freiraum (161) und mit einem Speisepunkt (170) versehen ist, die 3-in-1-Antenne einen GPS-Antennenabschnitt (111) zum Empfangen eines GPS-Signals und einen BT/WiFi-Antennenabschnitt (112) zum Empfangen und Übertragen eines WiFi-Signals und eines BT/WiFi-Signals umfasst,
die Antennenanpassungseinheit (110) und die Funkfrequenzeinheit (130) an der Leiterplatte (160) angeordnet sind, der GPS-Antennenabschnitt (111) an der Antennenhalterung (150) angeordnet ist, mindestens ein Teil des BT/WiFi-Antennenabschnitts (112) am Freiraum (161) der Leiterplatte (160) angeordnet ist, der GPS-Antennenabschnitt (111) und der BT/WiFi-Antennenabschnitt (112) mit der Antennenanpassungseinheit (120) über den Speisepunkt (170) verbunden sind, und die Funkfrequenzeinheit (130) den GPS-Antennenabschnitt (111) und den BT/WiFi-Antennenabschnitt (112) über den Speisepunkt (170) aktiviert.

2. 3-in-1-Antennenvorrichtung für das Mobiltelefon nach Anspruch 1, **dadurch gekennzeichnet, dass** die 3-in-1-Antenne (110) mit der Antennenanpassungseinheit (120) durch eine Impedanzleitung verbunden ist, die Antennenanpassungseinheit (120) mit dem Zweiband-Duplexer (131) durch eine Impedanzleitung verbunden ist, der Zweiband-Duplexer (131) mit dem BT/WiFi-Funkfrequenzschaltkreis (132) und dem GPS-Funkfrequenzschaltkreis (133) durch eine Impedanzleitung verbunden ist.

3. 3-in-1-Antennenvorrichtung für das Mobiltelefon nach Anspruch 2, **dadurch gekennzeichnet, dass** die elektrische Impedanz der Impedanzleitungen 50 Ohm beträgt.

4. 3-in-1-Antennenvorrichtung für das Mobiltelefon nach Anspruch 1, **dadurch gekennzeichnet, dass** die Antennenanpassungseinheit (120) ein erstes Element (121), ein zweites Element (122) und das dritte Element (123) umfasst, die 3-in-1-Antenne (110) durch das zweite Element (122) geerdet ist, die 3-in-1-Antenne (110) mit der Funkfrequenzeinheit (130) und mit einem Ende des dritten Elementes (123) durch das erste Element (121) verbunden ist, und das andere Ende des dritten Elementes (123) geerdet ist.

5. 3-in-1-Antennenvorrichtung für das Mobiltelefon nach Anspruch 4, **dadurch gekennzeichnet, dass** das erste Element (121), das zweite Element (122) und das dritte Element (123) jeweils ein Induktor, ein Kondensator oder ein Widerstand sind.

6. 3-in-1-Antennenvorrichtung für das Mobiltelefon nach Anspruch 1, **dadurch gekennzeichnet, dass** die 3-in-1-Antenne (110) eine Inverted-F-Antenne oder eine Monopolantenne ist.

7. 3-in-1-Antennenvorrichtung für das Mobiltelefon nach Anspruch 1, **dadurch gekennzeichnet, dass** die Länge des BT/WiFi-Antennenabschnitts (112) zwischen 1/4 und 1/2 der Wellenlänge des BT-Signals und der Wellenlänge des WiFi-Signals liegt, und die Länge des GPS-Antennenabschnitts (111) zwischen 1/4 und 1/2 der Wellenlänge des GPS-Signals liegt.

8. Mobiles Endgerät, **dadurch gekennzeichnet, dass** das mobile Endgerät die 3-in-1-Antennenvorrichtung für das Mobiltelefon nach Anspruch 1 umfasst.

## Revendications

1. Dispositif d'antenne trois-en-un pour un téléphone portable, **caractérisé en ce que** le dispositif d'antenne trois-en-un pour le téléphone portable comprend :
une antenne trois-en-un (110) pour recevoir et transmettre un signal WiFi (Wireless Fidelity) et un signal BT (Bluetooth), et pour recevoir un signal GPS (Global Positioning System, ou système de positionnement global) ;
une unité d'adaptation d'antenne (120) pour l'adaptation d'impédance de l'antenne trois-en-un (110) connectée à l'unité d'adaptation d'antenne (120) ; et
une unité RF (radiofréquence) (130) comprenant un duplexeur à double bande (131), un circuit RF BT / WiFi (132) pour le traitement du signal BT et du signal WiFi, et un circuit RF GPS (133) pour le traitement du signal GPS, le circuit RF BT / WiFi (132) et le circuit RF GPS (133) étant connectés à l'unité d'adaptation d'antenne (120) via le duplexeur à double bande (131) ;
dans lequel le téléphone portable comprend un circuit imprimé (PCB) (160), le dispositif d'antenne trois-en-un comprend également une support d'antenne (150), le circuit imprimé (160) comporte une zone de dégagement (161) et un point d'alimentation (170), l'antenne trois-en-un comprend un segment d'antenne GPS (111) pour recevoir un signal GPS et un segment d'antenne BT / Wifi (112) pour recevoir et transmettre un signal WiFi et un signal BT / WiFi,
l'unité d'adaptation d'antenne (110) et l'unité RF (130) sont placées sur le PCB (160), le segment d'antenne GPS (111) est placé sur le support d'antenne (150), au moins une partie du segment d'antenne BT / WiFi (112) est placé sur la zone de dégagement (161) du PCB (160), le segment d'antenne GPS (111) et le segment d'antenne BT / WiFi (112) sont connectées à l'unité d'adaptation d'antenne (120) via le point d'alimentation (170), et l'unité RF (130) active le segment d'antenne GPS (111) et le segment d'antenne BT / WiFi (112) via le point d'alimentation (170).

2. Dispositif d'antenne trois-en-un pour téléphone portable selon la revendication 1, **caractérisé en ce que** l'antenne trois-en-un (110) est connectée à l'unité d'adaptation d'antenne (120) via une ligne d'impédance, l'unité d'adaptation d'antenne (120) est connectée au duplexeur à double bande (131) via une ligne d'impédance, le duplexeur à double bande (131) est connecté au circuit RF BT / WiFi (132) et au circuit RF GPS (133) via une ligne d'impédance.

3. Dispositif d'antenne trois-en-un pour téléphone portable selon la revendication 2, **caractérisé en ce que** l'impédance électrique des lignes d'impédance est de 50 ohms.

4. Dispositif d'antenne trois-en-un pour téléphone portable selon la revendication 1, **caractérisé en ce que** l'unité d'adaptation d'antenne (120) comprend un premier élément (121), un deuxième élément (122), et un troisième élément (123), l'antenne trois-en-un (110) est mis à la terre via le deuxième élément (122), l'antenne trois-en-un (110) est connectée à l'unité RF (130) et à une extrémité du troisième élément (123) via le premier élément (121), et l'autre extrémité du troisième élément (123) est mis à la terre.

5. Dispositif d'antenne trois-en-un appareil pour téléphone portable selon la revendication 4, **caractérisé en ce que** le premier élément (121), le deuxième élément (122), et le troisième élément (123) sont chacun une inductance, un condensateur, ou une résistance.

6. Dispositif d'antenne trois-en-un pour téléphone portable selon la revendication 1, **caractérisé en ce que** l'antenne trois-en-un (110) est une antenne en F inversé ou une antenne unipolaire.

7. Dispositif d'antenne trois-en-un pour téléphone portable selon la revendication 1, **caractérisé en ce que** la longueur du segment d'antenne BT / WiFi (112) est d'1/4 à 1/2 de la longueur d'onde du signal BT et de la longueur d'onde du signal WiFi de longueur d'onde, et la longueur du segment d'antenne GPS (111) est d'1/4 à 1/2 de la longueur d'onde du signal GPS.

8. Terminal portable, **caractérisé en ce que** le terminal portable comprend le dispositif d'antenne trois-en-un pour téléphone portable selon la revendication 1.
